# EUROPEAN PATENT APPLICATION

(11) **EP 4 199 315 A1**
(43) Date of publication of application: **21.06.2023**
(21) Application number: 21214502.3
(22) Date of filing: 14.12.2021
(51) Int. Cl.: H02K 3/51

(54) **A ROTOR FOR A ROTARY ELECTRIC MACHINE**

(71) Applicant: Valeo eAutomotive Germany GmbH, 91056 Erlangen (DE)
(72) Inventor: Schlereth, Alexander, 97616 Bad Neustadt a.d.Saale (DE); Wolf, Nico, 97616 Bad Neustadt a.d.Saale (DE); BACH, Regina, 97616 Bad Neustadt a.d.Saale (DE); Wieczorek, Christoph, 97616 Bad Neustadt a.d.Saale (DE); Siepker, Carsten, 97616 Bad Neustadt a.d.Saale (DE)
(74) Representative: Valeo Powertrain Systems

(57) **Abstract**

The invention concerns a rotor for a rotary electric machine, the rotor having an axis of rotation and comprising:
- a rotor shaft extending parallel to the axis of rotation;
- a rotor body (7) mounted on the rotor shaft and having a plurality of teeth protruding radially;
- at least one field coil wound around the plurality of teeth, said field coil forming coil ends at axial ends of the teeth;
- at least one cover (15) mounted on the rotor shaft and configured to cover the coil ends, said cover having a mounting opening (16) receiving a portion (17) of the rotor shaft so that the cover and the portion of the rotor shaft exert reciprocal radial force on each other to ensure the fixation;
characterized in that said mounting opening (16) and said rotor shaft portion have, in a cross-section perpendicular to the axis of rotation, form-fitting profiles (18) which are defined by a contour (19) having a plurality of points (A, B) that are at different distances from the axis of rotation.

## Description

### FIELD OF THE INVENTION

The present invention belongs in particular to the field of rotary electric machines configured to be on board of an automotive vehicle, such as an electric vehicle or a hybrid vehicle. The vehicle can be of any type, such as a land, air or sea vehicle.

The present invention relates in particular to a rotor for a rotary electric machine.

### BACKGROUND OF THE INVENTION

As is known, an electric or a hybrid automotive vehicle presents an electric drive comprising a rotary electric machine which needs to be supplied with electric power, for instance by a high voltage power supply battery, to deliver a mechanical power in order to ensure propulsion of the vehicle.

In a general manner, the rotary electric machine comprises a stator, referring to a fixed part of the rotary electric machine, and a rotor, referring to a rotating part of the rotary electric machine. The rotor then comprises a rotor shaft configured to ensure the transmission of the mechanical power between the rotary electric machine and an exterior driven apparatus, such as the wheels of the vehicle.

In particular, it is known to have the rotor separately excited using a field coil. This type of rotors is commonly referred as wound rotors or slip ring rotors. Such a rotor comprises a rotor body formed of a stack of laminations and has a plurality of teeth projecting radially. Then, the field coil is configured to be wound around each of the plurality of teeth.

A conventional solution for mounting the rotor body of the rotor shaft relies on having an outer circumference of the rotor shaft slightly higher than an inner circumference of the rotor body. Then, the rotor body is mounted on the rotor shaft by press-fitting.

A cover is provided to protect the field coil at its axial ends, said cover being mounted on the rotor shaft.

In known rotors, the rotor shaft and the cover have cylindrical circular profiles cooperating together by press-fitting. In such circular configuration, the press-fit mounting between the rotor shaft and the cover may happen to be insufficient during high-speed rotations, which can cause an accidental dissembling of the cover and the rotor shaft. Press-fit efforts must also be high enough to take into account some thermal shrinking effects. Such higher efforts may result in undesirable additional stresses.

In this context, an objective of the present invention is to provide an improved assembly of the cover on the rotor shaft. Said cover is configured to protect the coil ends.

### SUMMARY OF THE INVENTION

The present invention concerns a rotor for a rotary electric machine, the rotor having an axis of rotation and comprising:
- a rotor shaft extending parallel to the axis of rotation;
- a rotor body mounted on the rotor shaft and having a plurality of teeth protruding radially;
- at least one field coil wound around the plurality of teeth, said field coil forming coil ends at axial ends of the teeth;
- at least one cover mounted on the rotor shaft and configured to cover the coil ends, said cover having a mounting opening receiving a portion of the rotor shaft so that the cover and the portion of the rotor shaft exert reciprocal radial force on each other to ensure the fixation.

The rotor is characterized in that said mounting opening and said rotor shaft portion have, in a cross-section perpendicular to the axis of rotation, form-fitting profiles which are defined by a contour having a plurality of points that are at different distances from the axis of rotation.

According to the present invention, the contour having a plurality of points that are at different distances from the axis of rotation defines a non-circular shape. As a consequence, the form-fitting profiles provide an additional anti-rotation function to the connection between the shaft and the cover, even in the case a gap occurs between the mounting opening and the portion of the rotor shaft because of their different coefficients of thermal expansion.

The invention offers the advantage of easy assembly of the cover on the rotor shaft, and it is possible to avoid a thermal assembly.

According to an aspect of the invention, the form-fitting profiles are smooth. In particular, the profiles do not comprise gear teeth.

The invention provides smaller notch effect compared to gear teeth used to assemble the rotor shaft and the cover. It is known in the state of the art that the notch effect results in uneven stress distribution, leading to stress peaks.

As a consequence, the invention provides an improved assembly of the cover on the rotor shaft.

According to an aspect of the invention, the contour having a plurality of points that are at different distances presents a symmetry by a rotation around the axis of the rotor of an angle of 180°, or an angle of 120°, or an angle of 90° or an angle of 72° or an angle of 60°.

According to an aspect of the invention, the contour has a number of sides that is equal to 3, 4, 5 or 6.

According to an aspect of the invention, the contour has a plurality of sides connected each to the other by a rounded corner.

According to an aspect of the invention, each side of the contour is curve. In other words, the side is non-rectilinear.

According to an aspect of the invention, each side of the contour is rectilinear.

According to an aspect of the invention, the contour has a P4C shape in the DIN norms (Deutsches Institut für Normung).

According to an aspect of the invention, the contour has a P3G shape in the DIN norms.

According to an aspect of the invention, the cover comprises a planar central region provided with the mounting opening.

According to an aspect of the invention, the cover comprises a hub with an axial column defining the mounting opening that is press-fitted to the rotor shaft portion.

According to an aspect of the invention, the cover comprises a main wall perpendicular to the axis of rotation.

According to an aspect of the invention, the cover has an external circumferential skirt connected to the main wall.

According to an aspect of the invention, this external skirt comes in abutment with the rotor body.

According to an aspect of the invention, an axial abutment element is provided between the rotor shaft and the cover in order to further secure axial stop of the cover on the rotor shaft.

According to an aspect of the invention, the axial abutment element comprises a circlip retained in a groove of the rotor shaft and the cover abuts on the circlip.

According to an aspect of the invention, the axial abutment element comprises a nut on the shaft.

According to an aspect of the invention, two covers are provided at both axial ends of the rotor body.

According to an aspect of the invention, the shaft is made of steel.

According to an aspect of the invention, the cover is made of aluminum.

The invention also relates to a rotary electric machine for an electric or a hybrid vehicle, comprising a rotor as defined above. The rotary electric machine in particular comprises a stator, the stator surrounding coaxially the rotor.

The invention also relates to a method for producing a rotor for a rotary electric machine, the rotor having an axis of rotation and comprising a rotor shaft extending parallel to the axis of rotation, a rotor body mounted on the rotor shaft and having a plurality of teeth protruding radially and at least one field coil wound around the plurality of teeth, said field coil forming coil ends at axial ends of the teeth;
the method comprising the following step:
- mounting at least one cover on the rotor shaft to cover the coil ends, said cover having a mounting opening receiving a portion of the rotor shaft so that the cover and the portion of the rotor shaft exert reciprocal radial force on each other to ensure the fixation, wherein said mounting opening and said rotor shaft portion have, in a cross-section perpendicular to the axis of rotation, form-fitting profiles which are defined by a contour having a plurality of points that are at different distances from the axis of rotation.

The invention also relates to an electric drive system comprising the rotary electric machine as defined above and an inverter configured to convert a direct current voltage coming from a high-voltage power supply battery into an alternating current voltage so as to drive the rotary electric machine. The AC voltage may be a multiphase AC voltage, especially a three-phase voltage.

The invention also relates to an electric or a hybrid vehicle, comprising the electric drive system for driving the vehicle. The vehicle may comprise the high-voltage power supply battery, preferably a rechargeable battery for providing the DC voltage to the inverter, if applicable.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
Figure 1 is a schematic diagram of an automotive electric or hybrid vehicle comprising a rotary electric machine according to an embodiment of the invention;
Figure 2 is a schematic diagram of a rotor and a stator of the rotary electric machine of Figure 1;
Figure 3 is a schematic diagram in perspective of the rotor of Figure 2;
Figure 4 is a schematic diagram of a partial cut view of the rotor of Figure 3;
Figure 5 is a schematic diagram of a view along axis X of the cover of the rotor of Figure 4;
Figure 6 is a schematic diagram of a view along axis X of the cover according to another embodiment of the invention;
Figure 7 is a schematic diagram of a partial cut view of the rotor according to another embodiment of the invention;
Figure 8 is a schematic diagram of a partial cut view of the rotor according to another embodiment of the invention.

### DETAILED DESCRIPTION

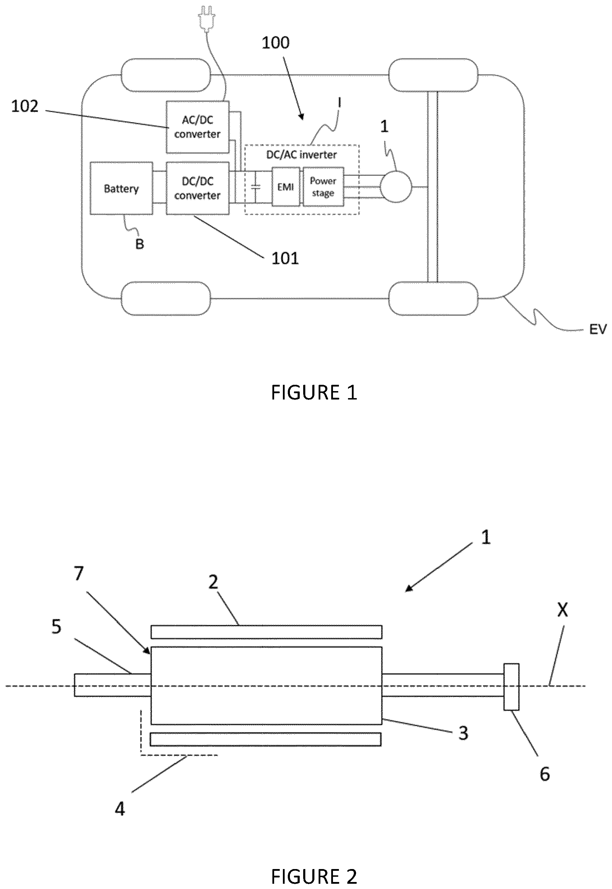

Figure 1 represents schematically an electric vehicle or a hybrid electric automotive vehicle EV comprising wheels and an electric drive system 100 configured to drive at least indirectly at least one of the wheels of the vehicle. The vehicle may comprise a high-voltage power supply battery B, preferably a rechargeable battery, for providing electric power to the electric drive.

The electric drive system 100 comprises a rotary electric machine 1 and an inverter I configured to convert a direct current (DC) voltage coming from the high-voltage power supply battery B into an alternating current (AC) voltage in order to drive the rotary electric machine 1. The rotary electric machine 1 may in particular be a three-phase rotary electric machine supplied with a three-phase AC voltage. A DC/DC converter 101 is provided between the battery B and the inverter I. An AC/DC converter 102 is provided between a network power supply and the inverter I in a known manner.

As illustrated in Figure 2, the rotary electric machine 1 comprises a stator 2, referring to the fixed part of the rotary electric machine, and a rotor 3, referring to the rotating part of the rotary electric machine. The stator 2 presents an annular shape and surrounds coaxially the rotor 3. The rotary electric machine 1 comprises a casing 4 covering the stator 2 and the rotor 3. In a known manner, the stator 2 comprises a stator body formed of a stack of laminations having a plurality of stator teeth projecting radially, and stator windings wound around the stator teeth.

The rotor 3 is a separately excited rotor, also commonly referred as a wound rotor or a slip ring rotor. In this type of rotor, the rotor comprises field coils connected to an external power supply through slip rings 6. The slip rings 6 correspond to electro-mechanical devices configured to allow the exchange of electric power between the field coils and the external power supply.

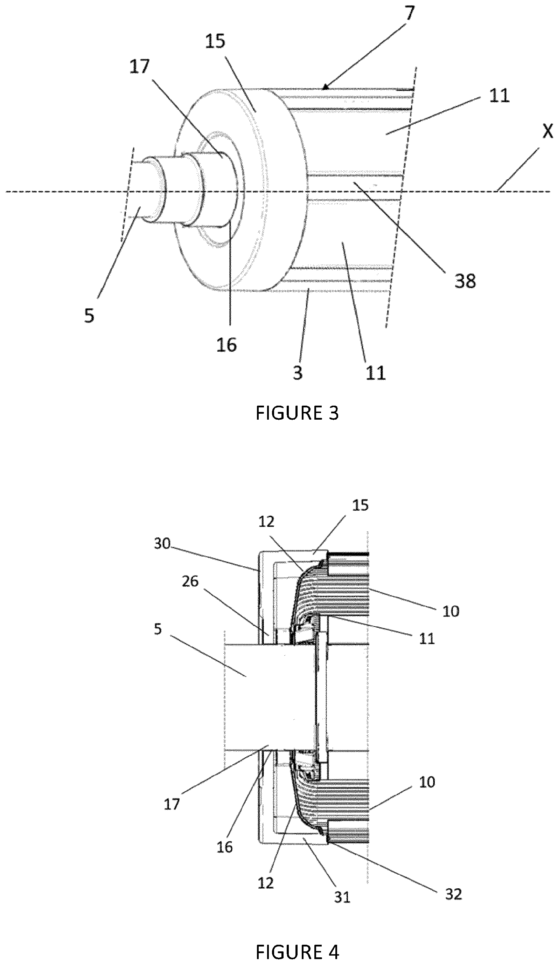

As illustrated in Figure 3, the rotor 1 comprises a rotor shaft 5 configured to rotate around an axis X of rotation, and a rotor body 7 being configured to be mounted on the rotor shaft 5. The shaft 5 is made of steel.

The rotor body 7 has a plurality of teeth 11 protruding radially.

As visible on Figure 4, field coils 10 are wound around the plurality of teeth 11, said field coils 10 forming coil ends 12 at axial ends of the teeth 11.

Longitudinal inserts 38 are mounted between consecutive teeth 11.

Two covers 15 are mounted on the rotor shaft 5 and configured to cover the coil ends 12 on both axial ends of the rotor body 7. Only one cover 15 is visible on Figures 3 and 4. The other cover 15 is similar to the one shown on Figures 3 and 4.

Each cover 15 has a mounting opening 16 receiving a portion 17 of the rotor shaft 5 so that the cover 15 and the portion 17 of the rotor shaft exert reciprocal radial force on each other to ensure the fixation. The covers 15 are made of aluminum.

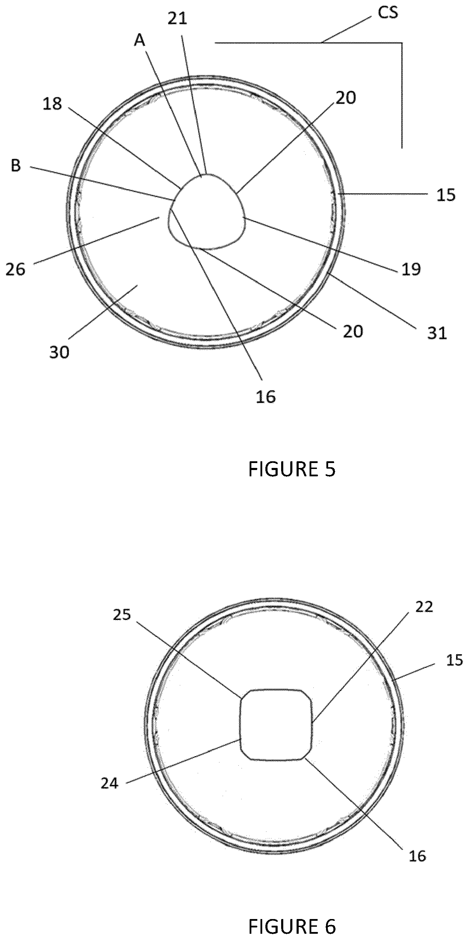

As illustrated in Figures 4 and 5, the mounting opening 16 and said rotor shaft portion 17 have, in a cross-section CS perpendicular to the axis of rotation X, form-fitting profiles 18 which are defined by a contour 19 having a plurality of points that are at different distances from the axis of rotation X.

The contour 19 defines a non-circular shape. As a consequence, the form-fitting profiles 1 provide an additional anti-rotation function to the connection between the shaft 5 and the cover 15.

In the example of Figure 5, the contour 19 has a P3G shape in the DIN norms (Deutsches Institut für Normung).

The contour 19 has a number of sides 20 that is equal to 3 and presents a symmetry by a rotation around the axis X of the rotor of an angle of 120°. The sides 20 are connected each to the other by a rounded corner 21. The sides 21 are curve. In other words, the sides 21 are non-rectilinear.

For instance, point A (at a corner) is at a higher distance of axis X than point B (at a side), as visible on Figure 5.

The contour 19 may present other shapes.

For instance, Figure 6 shows a contour 22 having a P4C shape in the DIN norms.

The contour 22 has a number of sides 24 that is equal to 4 and presents a symmetry by a rotation around the axis X of the rotor of an angle of 90°. The sides 20 are connected each to the other by a rounded corner 25. The sides 24 are rectilinear.

In other non-illustrated examples, the contour may present a symmetry by a rotation around the axis of the rotor of an angle of 180° or an angle of 72° or an angle of 60°.

The contour may have a number of sides that is equal to 5 or 6.

The cover 15 comprises a planar central region 26 provided with the mounting opening 16.

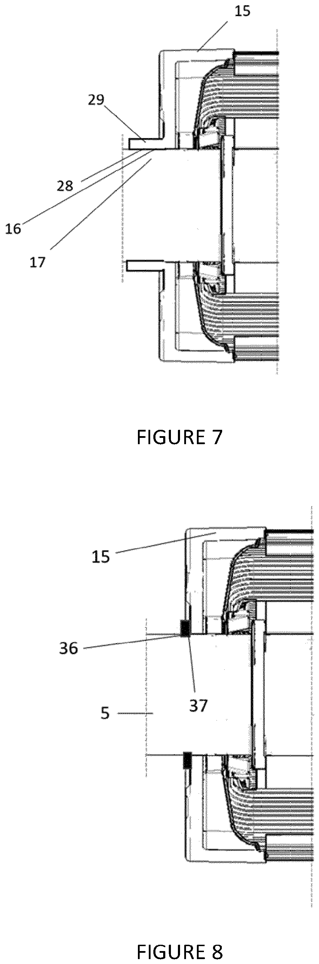

In another embodiment of the invention illustrated in Figure 7, the cover 15 comprises a hub 28 with an axial column 29 defining the mounting opening 16 that is press-fitted to the rotor shaft portion 17.

The rotor shaft portion 17 with the non-circular contour extends only on a portion of the total length of the rotor shaft.

The cover 15 comprises a main wall 30 perpendicular to the axis of rotation X.

The cover 15 has an external circumferential skirt 31 connected to the main wall 30.

This external skirt 31 comes in abutment with the rotor body 7 in a contact region 32.

An axial abutment element is provided between the rotor shaft 5 and the cover 15 in order to further secure axial stop of the cover 15 on the rotor shaft 5.

In the embodiment illustrated in Figure 8, the axial abutment element comprises a circlip 36 retained in a groove 37 of the rotor shaft 5 and the cover 15 abuts on the circlip 36.

In another non-illustrated embodiment, the axial abutment element comprises a nut on the shaft 5.

The method for producing the rotor comprises the following step:
- mounting the covers 15 on the rotor shaft 5 to cover the coil ends, each cover 15 having a mounting opening 16 receiving a portion 17 of the rotor shaft so that the cover 15 and the portion of the rotor shaft exert reciprocal radial force on each other to ensure the fixation.

## Claims

1. A rotor (3) for a rotary electric machine (1), the rotor (3) having an axis (X) of rotation and comprising:
- a rotor shaft (5) extending parallel to the axis of rotation (X);
- a rotor body (7) mounted on the rotor shaft (5) and having a plurality of teeth (11) protruding radially;
- at least one field coil (10) wound around the plurality of teeth, said field coil forming coil ends (12) at axial ends of the teeth;
- at least one cover (15) mounted on the rotor shaft and configured to cover the coil ends, said cover having a mounting opening (16) receiving a portion (17) of the rotor shaft so that the cover and the portion of the rotor shaft (5) exert reciprocal radial force on each other to ensure the fixation;
**characterized in that** said mounting opening (16) and said rotor shaft portion have, in a cross-section perpendicular to the axis of rotation (X), form-fitting profiles (18) which are defined by a contour (19) having a plurality of points (A, B) that are at different distances from the axis of rotation (X).

2. The rotor (3) as claimed in the preceding claim, wherein the contour (19) having a plurality of points that are at different distances presents a symmetry by a rotation around the axis of the rotor of an angle of 180°, or an angle of 120°, or an angle of 90° or an angle of 72° or an angle of 60°.

3. The rotor (3) as claimed in any of the preceding claims, wherein the contour (19) has a number of sides (20; 24) that is equal to 3, 4, 5 or 6.

4. The rotor (3) as claimed in any of the preceding claims, wherein the contour has a plurality of sides (20; 24) connected each to the other by a rounded corner (21; 25).

5. The rotor (3) as claimed in any of the preceding claims, wherein each side of the contour is curve.

6. The rotor (3) as claimed in the preceding claim, wherein the contour has a P3G shape in the DIN norms.

7. The rotor (3) as claimed in any of claims 1 to 4, wherein each side of the contour is rectilinear.

8. The rotor (3) as claimed in the preceding claim, wherein the contour has a P4C shape in the DIN norms.

9. The rotor (3) as claimed in any of the preceding claims, wherein the cover (15) comprises a planar central region (26) provided with the mounting opening (16).

10. The rotor (3) as claimed in any of claims 1 to 8, wherein the cover (15) comprises a hub with an axial column (29) defining the mounting opening that is press-fitted to the rotor shaft portion (17).

11. The rotor (3) as claimed in any of the preceding claims, wherein the cover has an external circumferential skirt (31) connected to a main wall.

12. The rotor (3) as claimed in any of the preceding claims, wherein an axial abutment element is provided between the rotor shaft (5) and the cover (15) in order to further secure axial stop of the cover on the rotor shaft.

13. The rotor (3) as claimed in the preceding claim, wherein the axial abutment element comprises a circlip (36) retained in a groove (37) of the rotor shaft and the cover abuts on the circlip.

14. A rotary electric machine for an electric or a hybrid vehicle, comprising a rotor (3) as claimed in any of claims 1 to 13.

15. A method for producing a rotor (3) for a rotary electric machine (1), the rotor (3) having an axis (X) of rotation and comprising a rotor shaft extending parallel to the axis of rotation, a rotor body (7) mounted on the rotor shaft (5) and having a plurality of teeth (11) protruding radially and at least one field coil wound around the plurality of teeth, said field coil forming coil ends at axial ends of the teeth;
the method comprising the following step:
- mounting at least one cover (15) on the rotor shaft to cover the coil ends (12), said cover having a mounting opening (16) receiving a portion of the rotor shaft so that the cover and the portion of the rotor shaft exert reciprocal radial force on each other to ensure the fixation, wherein said mounting opening and said rotor shaft portion have, in a cross-section perpendicular to the axis of rotation, form-fitting profiles which are defined by a contour having a plurality of points (A; B) that are at different distances from the axis of rotation (X).
